# DEMANDE DE BREVET EUROPEEN

(11) **EP 0 568 447 A1**
(43) Date de publication de la demande: **03.11.1993**
(21) Numéro de dépôt: 93401094.3
(22) Date de dépôt: 27.04.1993
(51) Int. Cl.: H04J 3/08, H04Q 11/00

(54) **Multiplexeur à insertion et extraction**

(30) Priorité: 29.04.1992 FR 9205295
(71) Demandeur: FRANCE TELECOM, F-75015 Paris (FR)
(72) Inventeur: Hamel, André, F-22300 Lannion (FR)
(74) Mandataire: Dubois-Chabert, Guy

(57) **Abrégé**

Il comprend un premier photodétecteur (14) qui reçoit des informations sous forme optique, dont certaines sont à envoyer à des destinataires choisis parmi N destinataires associés à des longueurs d'ondes L1, ..., LN tandis que les autres informations forment un flux de sortie à la longueur d'onde LO, un deuxième photodétecteur (16) qui reçoit sous forme optique des informations à insérer dans ce flux, une source accordable (18) qui convertit les signaux du premier photodétecteur en signaux optiques de longueurs d'ondes choisies parmi L0, L1 ... LN sous la commande de moyens de gestion (20) et suivant leur destination, une autre source (22) qui convertit les signaux du deuxième photodétecteur en signaux optiques de longueur d'onde L0, un coupleur (24) reliant les sources à N+1 filtres (f0, ..., f3) ne laissant respectivement passer que L0 ... LN. Application aux télécommunications optiques.

## Description

La présente invention concerne un multiplexeur à insertion et extraction.

Elle s'applique notamment au domaine des télécommunications optiques.

L'invention est prévue pour extraire d'une ligne optique des informations transmises (sous forme optique) par cette ligne et pour insérer d'autres informations sous forme optique dans cette ligne.

Les multiplexeurs à insertion et extraction connus utilisent une technologie électronique et présentent de ce fait des inconvénients : ils sont inadaptés au traitement d'informations à grand débit et ne permettent pas des commutations rapides.

La présente invention a pour but de remédier à ces inconvénients et propose un multiplexeur à insertion et extraction qui met en oeuvre une technologie optique, ce qui permet l'utilisation de signaux optiques de différentes longueurs d'ondes et conduit à une grande rapidité de commutation.

De façon précise, la présente invention a pour objet un multiplexeur à insertion et extraction, caractérisé en ce qu'il comprend :
- un premier photodétecteur prévu pour recouvrir un flux d'informations d'entrée sous forme optique et pour convertir celles-ci sous forme de signaux électriques, certaines de ces informations étant à extraire du flux d'entrée et à envoyer respectivement à des destinataires choisis parmi N destinataires tandis que les autres informations sont destinées à former un flux d'informations de sortie, N étant un nombre entier au moins égal à 1, les N destinataires étant respectivement associés à N longueurs d'ondes optiques L1, ..., LN différentes les unes des autres tandis que le flux d'informations de sortie est à une longueur d'onde LO,
- un deuxième photodétecteur prévu pour recevoir des informations sous forme optique, qui sont à insérer dans le flux d'informations de sortie, et pour convertir sous forme de signaux électriques ces informations à insérer,
- un premier convertisseur électro-optique qui est accordable, qui reçoit les signaux électriques issus du premier photodétecteur et qui est apte à convertir ceux-ci en signaux optiques de longueurs d'ondes choisies parmi LO, L1, ..., LN,
- des moyens de gestion prévus pour commander le premier convertisseur électro-optique pour que celui-ci fournisse ces signaux de longueurs d'ondes choisies parmi L0, L1 ..., LN, suivant la destination des informations correspondantes qui sont arrivées au premier photodétecteur,
- un deuxième convertisseur électro-optique prévu pour recevoir les signaux fournis par le deuxième photodétecteur et pour convertir ceux-ci en signaux optiques de longueur d'onde LO,
- un coupleur optique à 2 entrées et N+1 sorties, ces entrées étant respectivement reliées aux sorties des convertisseurs, et
- N+1 filtres optiques dont les entrées sont respectivement reliées aux sorties du coupleur et qui laissent respectivement passer les longueurs d'ondes L0, L1, ..., LN et seulement ces longueurs d'ondes.

Ainsi, le flux d'informations de sortie est disponible à la sortie du filtre qui laisse seulement passer LO et les informations destinées aux destinataires sont respectivement disponibles aux sorties des filtres qui laissent seulement passer L1, ..., LN.

Le multiplexeur à insertion et extraction objet de l'invention peut, lorsqu'il est inséré dans un réseau de communication à fibres optiques, être capable de s'adapter à l'évolution du trafic et de modifier la configuration du réseau sous les ordres des moyens de gestion.

Avec le développement des transmissions par fibres optiques, il est intéressant d'augmenter la cohérence d'un tel réseau du point de vue optique.

Selon un mode de réalisation particulier du multiplexeur objet de l'invention, les moyens de gestion que celui-ci comporte sont en outre prévus pour commander le deuxième convertisseur électro-optique pour que celui-ci émette des signaux de bourrage de longueur d'onde LO, ces signaux de bourrage occupant la place d'informations extraites.

Le multiplexeur objet de l'invention peut comprendre en outre des moyens d'amplification optique prévus pour recevoir le flux d'informations issu du filtre optique ne laissant passer que LO et pour amplifier l'intensité optique de ce flux.

Les filtres optiques que comporte ce multiplexeur peuvent être des filtres fixes ou des filtres accordables qui sont respectivement positionnés sur les longueurs d'ondes L0, L1, ..., LN.

Enfin, le deuxième convertisseur électro-optique du multiplexeur objet de l'invention peut être un convertisseur électro-optique accordable qui est positionné sur la longueur d'onde L0.

La présente invention sera mieux comprise à la lecture de la description d'exemples de réalisation donnés ci-après à titre purement indicatif et nullement limitatif, en faisant référence aux dessins annexés sur lesquels :
- la figure 1 est une vue schématique d'un réseau de télécommunications utilisant des multiplexeurs à insertion et extraction conformes à la présente invention,
- la figure 2 est une vue schématique d'un mode de réalisation particulier du multiplexeur à insertion et extraction objet de l'invention,
- la figure 3 est un diagramme temporel montrant des signaux qui arrivent à l'entrée du multiplexeur représenté sur la figure 2, et
- la figure 4 est un diagramme temporel montrant les signaux qui sont présents à la sortie du multiplexeur représenté sur la figure 2.

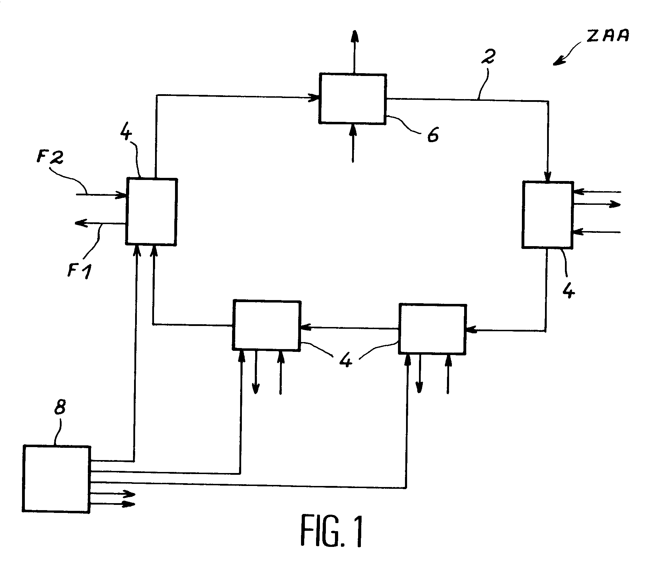

La figure 1 illustre schématiquement un exemple d'application de l'invention.

On voit sur cette figure 1 un réseau de télécommunications formant une Zone à Autonomie d'Acheminement ZAA comportant cinq centres qui sont réunis par une boucle de transmission à fibre optique 2.

Le débit des informations transmises par cette boucle est égal à 155 Mbit/s ou éventuellement 620 Mbit/s.

Parmi les centres de cette zone ZAA, on trouve quatre multiplexeurs à insertion et extraction 4 conformes à l'invention ainsi qu'un brasseur répartiteur numérique 6 qui relie la zone ZAA à un réseau d'interconnexion non représenté.

De plus, les multiplexeurs 4 et le brasseur répartiteur numérique 6 sont commandés par un réseau de gestion des télécommunications 8 qui est un réseau de supervision destiné à surveiller la qualité des transmissions.

Chaque multiplexeur à insertion et extraction 4 reçoit un flux d'informations d'entrée de la part du multiplexeur qui le précède sur la boucle de transmission 2 et fournit un flux d'informations de sortie au multiplexeur qui le suit sur cette boucle de transmission.

De plus, chaque multiplexeur 4 est prévu pour extraire du flux d'informations d'entrée qui lui parvient, les informations qui sont destinées aux usagers associés à ce multiplexeur 4.

Ceci est symbolisé par une flèche F1 sur la figure 1, le débit des informations envoyées aux usagers étant par exemple égal à 2 Mbit/s.

Ce multiplexeur 4 permet également l'insertion, dans le flux d'informations qu'il fournit, d'autres informations dont le débit est par exemple égal à 2 Mbit/s.

Ceci est symbolisé par la flèche F2 sur la figure 1.

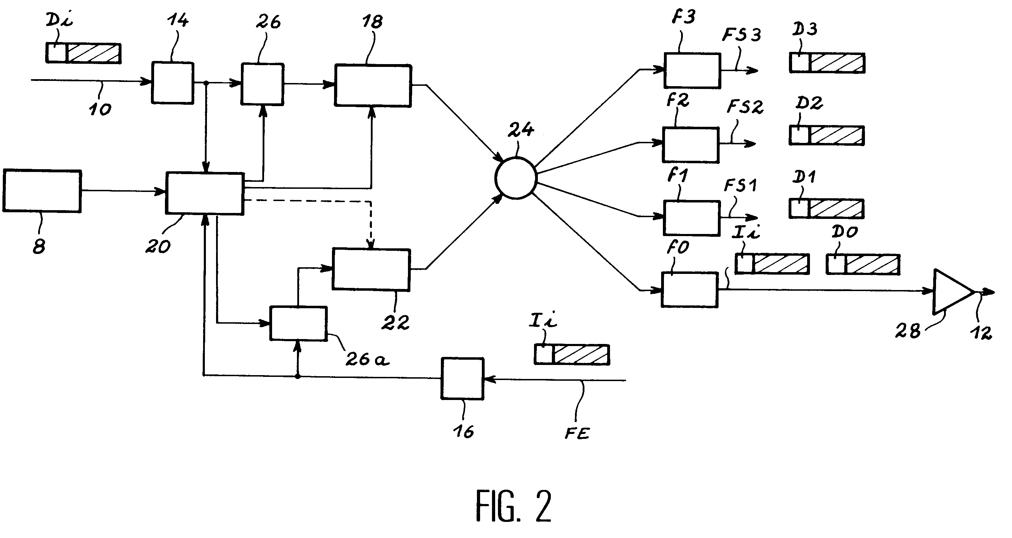

Sur la figure 2, on a représenté schématiquement un multiplexeur à insertion et extraction conforme à l'invention.

Après la description de la structure de ce multiplexeur, on indiquera d'abord le mode de fonctionnement de celui-ci avec des informations transmises en mode de transfert asynchrone qui offre une grande souplesse pour l'exploitation simultanée de services à différents débits allant de quelques kbit/s jusqu'à quelques dizaines de Mbit/s.

Le transfert de l'information se fait sous la forme de cellules de longueur constante (53 octets) et indépendamment de la nature de l'information transportée.

Chaque cellule contient, en plus de l'information transmise, une étiquette (5 octets) réservée à la gestion (identificateur de faisceau VPI, pour Virtual Pass Identifier, identificateur de voie VCI, pour Virtual Channel Identifier, ...).

On montrera ensuite que la solution proposée est également applicable à la hiérarchie synchrone avec un débit de 155 Mbit/s car les en-têtes permettent d'identifier la position des informations au débit de 2 Mbit/s.

Le multiplexeur à insertion et extraction conforme à l'invention, qui est schématiquement représenté sur la figure 2, reçoit par une fibre optique 10 un flux d'informations d'entrée sous forme optique et fournit sous forme optique un flux d'informations de sortie qui sont transmises par une fibre optique 12.

Le multiplexeur représenté sur la figure 2 est associé à N usagers ou destinataires, N étant égal à 3 sur la figure 2, et permet d'extraire du flux d'entrée les informations qui sont respectivement destinées à ces usagers et qui sont fournies à ceux-ci sous forme optique par l'intermédiaire de fibres optiques FS1, FS2 et FS3.

De plus, le multiplexeur représenté sur la figure 2 est prévu pour insérer dans le flux d'informations de sortie d'autres informations qui lui parviennent sous forme optique par l'intermédiaire d'une fibre optique FE.

Le multiplexeur représenté sur la figure 2 comprend un premier photodétecteur 14, un deuxième photodétecteur 16, un premier convertisseur électro-optique 18, des moyens de gestion 20, un deuxième convertisseur électro-optique 22, un coupleur optique 24 à deux entrées et N+1 sorties (4 sorties dans l'exemple représenté sur la figure 2), et N+1 filtres optiques, à savoir 4 filtres optiques f0, f1, f2 et f3 dans le cas de la figure 2, le flux d'informations de sortie étant disponible à la sortie du filtre optique f0 tandis que les informations respectivement destinées aux trois usagers sont respectivement disponibles à la sortie des filtres f1, f2 et f3.

Dans le multiplexeur représenté sur la figure 2, une longueur d'onde L0 est associée au flux d'informations de sortie et des longueurs d'onde L1, L2 et L3 différentes les unes des autres sont respectivement associés aux trois usagers, de sorte que les informations transmises par les fibres FS1, FS2 et FS3 sont respectivement à la longueur d'onde L1, à la longueur d'onde L2 et à la longueur d'onde L3.

Le photodétecteur 14 reçoit le flux d'informations d'entrée par l'intermédiaire de la fibre 10 et convertit ces informations sous forme de signaux électriques.

Le photodétecteur 16 reçoit, par l'intermédiaire de la fibre FE, les informations que l'on veut insérer dans le flux de sortie et transforme ces informations sous forme électrique.

Le convertisseur électro-optique 18, qui est accordable, reçoit les signaux issus du photodétecteur 14 et, sous la commande des moyens de gestion 20, convertit ces signaux sous forme optique à la longueur d'onde voulue suivant que les informations correspondantes sont destinées à passer dans le flux d'informations de sortie ou qu'elles sont destinées à l'un des usagers.

Le convertisseur électro-optique 22 reçoit les signaux électriques fournis par le photodétecteur 16 et convertit ceux-ci en signaux optiques de longueur d'onde L0.

Les deux entrées du coupleur optique 24 sont respectivement reliées aux sorties des convertisseurs 18 et 22 et les quatre sorties de ce coupleur 24 sont respectivement reliées aux entrées des filtres f0, f1, f2 et f3.

Les filtres f0, f1, f2 et f3 laissent respectivement passer les longueurs d'ondes L0, L1, L2 et L3 et seulement ces longueurs d'ondes.

Les informations transmises en mode de transfert asynchrone se présentent sous la forme de cellules avec une en-tête qui comporte des informations de gestion et notamment l'adresse de destination Di.

Le débit de ces cellules est par exemple de 10 Mbit/s.

Ces informations arrivent au multiplexeur qui les détecte par détection directe au moyen du photodétecteur 14.

Un retard T fixe est appliqué aux signaux issus du photodétecteur 14 pour tenir compte du temps de calcul des moyens de gestion 20.

Le retard T est appliqué grâce à des moyens de retard 26 qui sont montés entre le photodétecteur 14 et le convertisseur 18 comme on le voit sur la figure 2.

On remarquera également sur la figure 2 que les moyens de gestion 20 sont reliés au réseau de gestion 8 pour le suivi du trafic.

Les moyens de gestion 20 prennent connaissance, grâce au photodétecteur 14, de l'adresse de destination contenue dans l'en-tête d'une cellule incidente.

Si cette adresse est D0 l'information n'est destinée à aucun des usagers de la zone de distribution associée au multiplexeur de la figure 2 et le convertisseur accordable 18 est maintenu à la longueur d'onde L0.

Cette cellule dont l'adresse est D0 est alors transmise par la fibre de sortie 12 après avoir traversé le filtre f0.

Si l'adresse de la cellule est D3, cette cellule est destinée à cette zone de distribution et plus précisément à l'usager associé à la longueur d'onde L3.

Le convertisseur accordable 18 est alors commuté sur cette longueur d'onde L3.

Cette cellule d'adresse D3 est transposée optiquement à cette longueur d'onde L3 et envoyée au coupleur optique 24.

Seul le filtre optique f3, positionné sur la longueur d'onde L3, laisse passer cette cellule qui est aiguillée sur la sortie FS3 correspondant à l'usager auquel cette cellule est destinée.

Le même processus intervient lorsqu'une cellule d'adresse D1 ou D2 est traitée par les moyens de gestion.

Une telle cellule (d'adresse D1 ou D2) se trouve sur la sortie correspondant à son destinataire (et à la longueur d'onde L1 ou L2).

Il résulte de ce qui précède que le flux d'informations à la sortie du multiplexeur présente des vides qui correspondent à l'emplacement temporel des cellules qui ont été extraites et dérivées vers les usagers auxquels elles étaient destinées.

On pourrait laisser ces vides dans le flux de sortie mais on peut aussi insérer de nouvelles cellules pendant ces instants au moyen du convertisseur électro-optique 22, soit pour transmettre des informations dans le réseau en les insérant dans le flux d'informations de sortie soit pour réaliser un bourrage de la ligne de transmission afin de maintenir la présence d'une fréquence de rythme.

Le convertisseur électro-optique 22 engendre les cellules de bourrage sous la commande des moyens de gestion 20.

Les moyens de gestion 20 sont également informés, par le photodétecteur 16, de l'arrivée d'informations devant être insérées dans le flux de sortie.

Comme on le voit sur la figure 2, des moyens 26a, commandés par les moyens 20, sont prévus pour retarder les informations à insérer afin de les placer dans les emplacements temporels libérés par l'extraction.

Le convertisseur électro-optique 22 peut être un convertisseur électro-optique accordable et dans ce cas il est positionné à la longueur d'onde L0 par des moyens non représentés ou par les moyens de gestion 20.

De même, les filtres optiques f0, f1, f2 et f3 peuvent être des filtres accordables mais positionnés respectivement sur les longueurs d'onde L0, L1, L2 et L3 par des moyens non représentés ou par les moyens de gestion 20.

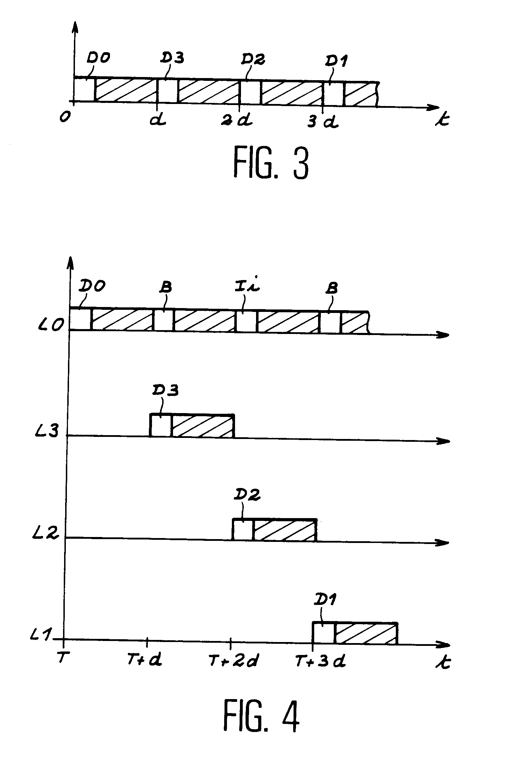

On voit sur le diagramme temporel de la figure 3 les cellules qui arrivent à l'entrée du multiplexeur à insertion et extraction représenté sur la figure 2.

Sur cette figure 3, t représente le temps et d représente la durée d'une cellule.

Le diagramme temporel de la figure 4 montre les informations qui sont envoyées aux différents usagers ainsi que les informations présentes dans le flux de sortie.

Cette figure 4 illustre également la possibilité d'insérer, dans le flux de sortie, des cellules de bourrage B ainsi que des informations constituées par des cellules dont l'adresse est notée Ii.

Les convertisseurs électro-optiques, ou sources, accordables ont de bonnes performances en modulation de fréquence.

Des fréquences de modulation de 1GHz ont été obtenues et la largeur de raie d'émission est située entre quelques MHz et 30 MHz selon les conditions expérimentales.

On notera que les filtres utilisés dans le multiplexeur effectuent la sélection de longueur d'onde et la conversion de signaux modulés en fréquence en signaux modulés en amplitude.

A la sortie du filtre f0 on peut prévoir un amplificateur optique 28 pour compenser les pertes optiques dues au coupleur 24 et à ce filtre f0.

Des temps de commutation de l'ordre de 1ns sont possibles avec les sources accordables.

Si les besoins d'organisation du réseau l'imposent, les moyens de gestion 20 peuvent intervenir pour modifier le contenu de l'en-tête des cellules lorsque celles-ci sont sous forme de signaux électriques et donc avant leur transposition sous forme optique, afin d'indiquer une nouvelle adresse de destination aux cellules qui sont aiguillées directement vers la fibre optique de sortie 12.

Le multiplexeur à insertion et extraction de la figure 2 est dimensionné afin de répondre au nombre maximum de sorties qui sont nécessaires mais ce nombre peut être réduit par une commande logicielle à partir du réseau de gestion 8.

Comme on l'a déjà indiqué, les moyens de gestion 20 peuvent être conçus de manière à assurer un flux complet de cellules ATM (mode de transfert asynchrone), ce qui améliore les performances du système de transmission car le rythme de transmission est maintenu et la récupération d'horloge est alors garantie.

Dans ce cas, les cellules de bourrage sont envoyées dans le réseau.

Mais ces cellules de bourrage ne sont pas émises lorsque des cellules contenant des informations, qui sont prioritaires, arrivent au multiplexeur en vue d'être insérées dans le flux d'informations de sortie.

La présente invention n'est pas limitée au traitement d'informations transmises en mode de transfert asynchrone.

La présente invention est utilisable également dans une boucle optique transportant des signaux numériques selon la hiérarchie synchrone c'est-à-dire des informations transmises en mode de transfert synchrone, par exemple avec un débit de 155 Mbit/s (pour des modules de transport synchrones d'ordre 1).

Chaque module est constitué de signaux regroupés sous forme de conteneurs ; un type de conteneur est défini pour un débit donné, par exemple 2 Mbit/s ; des conteneurs de tailles différentes peuvent être inclus dans un conteneur principal (module de transport synchrone d'ordre 1) : on peut ainsi regrouper 63 conteneurs à 2 Mbit/s dans un module de transport synchrone d'ordre 1. Les informations de gestion, ajoutées aux données, donnent l'adresse et la position de chacun des conteneurs d'ordre inférieur. On peut donc utiliser un multiplexeur à insertion et extraction du genre de celui de la figure 2 pour traiter les informations transmises en mode de transfert synchrone.

Pour réaliser les convertisseurs électro-optiques 18 et 22 on utilise par exemple des diodes lasers semi-conductrices multi-électrodes (2 ou 3 électrodes).

De tels composants sont mentionnés dans le document suivant :

Article de M.J. Chawki et al., publié dans Journal of Optical Communications, vol.11, N 3, mars 1990, pages 98 à 100.

De bons résultats sont obtenus avec un laser à contre-réaction répartie d'une longueur de 200 micromètres ; la plage d'accordabilité continue à 1,55 micromètre est égale à 200 GHz (c'est-à-dire 1,5 nm) ; la largeur de la raie laser est au maximum de 25 MHz ; un accord discontinu est obtenu sur une plage de 10nm.

Un autre laser à réflecteur réparti, permettant un accord continu sur 4,4 nm, est également décrit dans le document suivant :

Article de O. Ishida, publié dans Journal of Lightwave Technology, volume 9, N 9, septembre 1991, pages 1083 à 1093.

Les filtres optiques f0, f1, f2 et f3 sont de préférence des filtres optiques étroits et sont par exemple réalisés à l'aide d'interféromètres de Fabry-Perot.

On utilise par exemple des filtres qui sont commercialisés sous la forme de composants fibrés par la société Micron-Optics, ces filtres ayant une largeur à mi-hauteur ("full width at half maximum") comprise entre 1 GHz (0,01 nm) et 100 GHz (0,8 nm) ; ces filtres sont accordables électriquement avec un temps de commutation de l'ordre de 10 ms.

A titre purement indicatif et nullement limitatif, les longueurs d'onde L0, L1, L2 et L3 sont respectivement égales à 1519,4 nm, 1521,1 nm, 1521,3 nm et 1521,5 nm et l'on utilise des filtres commercialisés par la société Micron-Optics dont la largeur à mi-hauteur est égal à 10 GHz (0,08 nm).

## Revendications

1. Multiplexeur à insertion et extraction, caractérisé en ce qu'il comprend :
- un premier photodétecteur (14) prévu pour recevoir un flux d'informations d'entrée sous forme optique et pour convertir celles-ci sous forme de signaux électriques, certaines de ces informations étant à extraire du flux d'entrée et à envoyer respectivement à des destinataires choisis parmi N destinataires tandis que les autres informations sont destinées à former un flux d'informations de sortie, N étant un nombre entier au moins égal à 1, les N destinataires étant respectivement associés à N longueurs d'ondes optiques L1, ..., LN différentes les unes des autres tandis que le flux d'informations de sortie est à une longueur d'onde LO,
- un deuxième photodétecteur (16) prévu pour recevoir des informations sous forme optique, qui sont à insérer dans le flux d'informations de sortie, et pour convertir sous forme de signaux électriques ces informations à insérer,
- un premier convertisseur électro-optique (18) qui est accordable, qui reçoit les signaux électriques issus du premier photodétecteur et qui est apte à convertir ceux-ci en signaux optiques de longueurs d'ondes choisies parmi L0, L1, ..., LN,
- des moyens de gestion (20) prévus pour commander le premier convertisseur électro-optique (14) pour que celui-ci fournisse ces signaux de longueurs d'ondes choisies parmi L0, L1, ... LN, suivant la destination des informations correspondantes qui sont arrivées au premier photodétecteur,
- un deuxième convertisseur électro-optique (22) prévu pour recevoir les signaux fournis par le deuxième photodétecteur (16) et pour convertir ceux-ci en signaux optiques de longueur d'onde L0,
- un coupleur optique (24) à 2 entrées et N+1 sorties, ces entrées étant respectivement reliées aux sorties des convertisseurs (14, 16), et
- N+1 filtres optiques (f0, f1, f2, f3) dont les entrées sont respectivement reliées aux sorties du coupleur (24) et qui laissent respectivement passer les longueurs d'ondes L0, L1, ..., LN et seulement ces longueurs d'ondes.

2. Multiplexeur selon la revendication 1, caractérisé en ce que les moyens de gestion (20) sont en outre prévus pour commander le deuxième convertisseur électro-optique (22) pour que celui-ci émette des signaux de bourrage de longueur d'onde L0, ces signaux de bourrage occupant la place d'informations extraites.

3. Multiplexeur selon l'une quelconque des revendications 1 et 2, caractérisé en ce qu'il comprend en outre des moyens d'amplification optique (28) prévus pour recevoir le flux d'informations issu du filtre optique (f0) ne laissant passer que L0 et pour amplifier l'intensité optique de ce flux.

4. Multiplexeur selon l'une quelconque des revendications 1 à 3, caractérisé en ce que les filtres optiques (f0, f1, f2, f3) sont des filtres accordables qui sont respectivement positionnés sur les longueurs d'ondes L0, L1, ..., LN.

5. Multiplexeur selon l'une quelconque des revendications 1 à 4, caractérisé en ce que le deuxième convertisseur électro-optique (22) est un convertisseur électro-optique accordable qui est positionné sur la longueur d'onde L0.
